# EUROPÄISCHE PATENTSCHRIFT

(11) **EP 0 863 450 B1**
(45) Veröffentlichungstag und Bekanntmachung des Hinweises auf die Patenterteilung: **26.11.2003**
(21) Anmeldenummer: 98103341.8
(22) Anmeldetag: 26.02.1998
(51) Int. Cl.: G05B 9/02, A47C 7/74, B60H 1/00, B60N 2/44

(54) **Schaltung zur temperaturabhängigen Regelung des Heizstroms von Sitzheizungen**
Circuit for the temperature-dependant control of the heating current of seat heaters
Circuit pour la régulation de courant d'un appareil de chauffage de siège en fonction de la température

(30) Priorität: 05.03.1997 DE 19708867
(43) Veröffentlichungstag der Anmeldung: 09.09.1998
(73) Patentinhaber: ROBERT BOSCH GMBH, 70442 Stuttgart (DE)
(72) Erfinder: Topp, Rainer, 72768 Reutlingen (DE); Materna, Gerald, 72336 Balingen (DE)

(56) Entgegenhaltungen:
- EP-A- 0 333 233
- EP-A- 0 445 905
- DE-A- 3 030 294
- DE-A- 3 030 295
- DE-A- 3 818 974
- GB-A- 2 009 973
- US-A- 4 278 872
- US-A- 4 326 386
- US-A- 4 364 234
- US-A- 4 700 046
- US-A- 5 611 952

## Beschreibung

### Stand der Technik

Die Erfindung geht aus von einer Schaltung zur temperaturabhängigen Regelung des Heizstroms von Sitzheizungen nach der Gattung des Hauptanspruchs. Es ist schon eine solche Schaltung aus der US 5 229 579 bekannt, die eine Schutzfunktion derart aufweist, dass bei einem auftretenden Fehler, beispielsweise bei einer unterbrochenen Zuleitung zu einem Temperaturmesselement dieser Fehler erkannt wird und daraufhin der Heizstrom abgeschaltet wird. Die bekannte Schaltung weist ein Temperaturelement auf, das mit dem nicht invertierenden Eingang eines Komparators und mit dem invertierenden Eingang eines weiteren Komparators verbunden ist. Den beiden anderen Eingängen der Komparatoren wird jeweils ein Referenzsignal zugeführt. Die Verschaltung der Komparatoren ist so, dass der Heizstrom eingeschaltet wird, wenn die von dem Temperaturelement gemessene Temperatur einen einstellbaren Wert unterschreitet und gleichzeitig die Spannung am Thermoelement unter einem Grenzwert liegt.

### Aufgabe der Erfindung

Die Aufgabe der Erfindung besteht darin, eine zuverlässige Fehlererkennung bei einer Schaltungzur temperaturabhängigen Regelung des Heizstromes von Sitzheizungen zu ermöglichen und eine irrtümliche Fehlererkennung zu verhindern und damit eine irrtümliche Abschaltung der Sitzheizung zu vermeiden. Gelöst wird diese Aufgabe durch eine Schaltung mit den Merkmalen des Anspruchs 1.

### Vorteile der Erfindung

Die erfindungsgemäße Schaltung mit den kennzeichnenden Merkmalen des Hauptanspruchs hat demgegenüber den Vorteil, daß das Vorsehen eines Verzögerungsmittels bei Anschalten der Sitzheizung ein verzögertes Aktivwerden der Funktionsfähigkeit der Unterbrechungserkennung ermöglicht. Dies erlaubt eine unkritischere Auslegung einer Unterbrechungsreferenzspannung. Dies ist besonders dann notwendig, wenn aufgrund der Randbedingungen der Verdrahtungsmöglichkeiten die Leitungen zum Temperaturelement bzw. zu einem Referenzspannungsteiler nicht gemeinsam geführt werden können und über verschiedene Ströme unterschiedlich belastet sind. Dies ist beispielsweise dann der Fall, wenn bei einer vollständigen monolithischen Integration der Regelschaltung nur eine begrenzte Anzahl von Anschlußleitungen an dem Power-ASIC verfügbar sind und gleichzeitig eine Abschaltung des Systems über den Zündschalter des Kraftfahrzeugs (ohne daß dieser durch den Heizstrom des Systems belastet werden darf) möglich sein muß. In einem solchen Fall kann mit dem Verzögerungsmittel sichergestellt werden, daß die Unterbrechungserkennung einerseits im Falle einer Unterbrechung der Zuleitung zum Temperaturelement zuverlässig arbeitet, d. h. einen unzulässigen Dauerstrom sicher unterbindet, daß sie andererseits aber bei sehr tiefen Umgebungstemperaturen des Systems von Sitz und Sitzheizung nicht fälschlicherweise anspricht und so die Verfügbarkeit der Sitzheizung gerade bei Kälte nicht beeinträchtigt.

Durch die in den abhängigen Ansprüchen aufgeführten Maßnahmen sind vorteilhafte Weiterbildungen und Verbesserungen der im Hauptanspruch angegebenen Schaltung möglich. Zwei notwendige Referenzsignalquellen werden in einfacher Weise durch einen Spannungsteiler mit zwei Abgriffen realisiert.

Eine kostengünstige Realisierung des Verzögerungsmittels ergibt sich durch ein Monoflopglied, das über ein Oderglied die Unterbrechungserkennung für einen vorbestimmten Zeitraum nach Einschalten der Sitzheizung deaktiviert.

Liefert das Monoflop einen Puls mit einer temperaturabhängigen Pulsdauer, insbesondere einer langen Pulsdauer bei tiefen Umgebungstemperaturen, so wird eine noch weiter erhöhte Funktionssicherheit gewährleistet. Durch die Temperaturabhängigkeit der Pulsdauer wird auch für den Fall, daß der Sitz schon heiß ist und die Zuleitung zum Temperaturelement unterbrochen ist, eine weitere Erhitzung des Sitzes sicher unterbunden.

Eine Ausgestaltung des Monoflopglieds mit einem Oszillator führt zur vollen Integrationsfähigkeit des intelligenten Heizungsschalters inklusive des Schalters, der vorzugsweise als Leistungshalbleiterschalter ausgebildet ist.

### Zeichnung

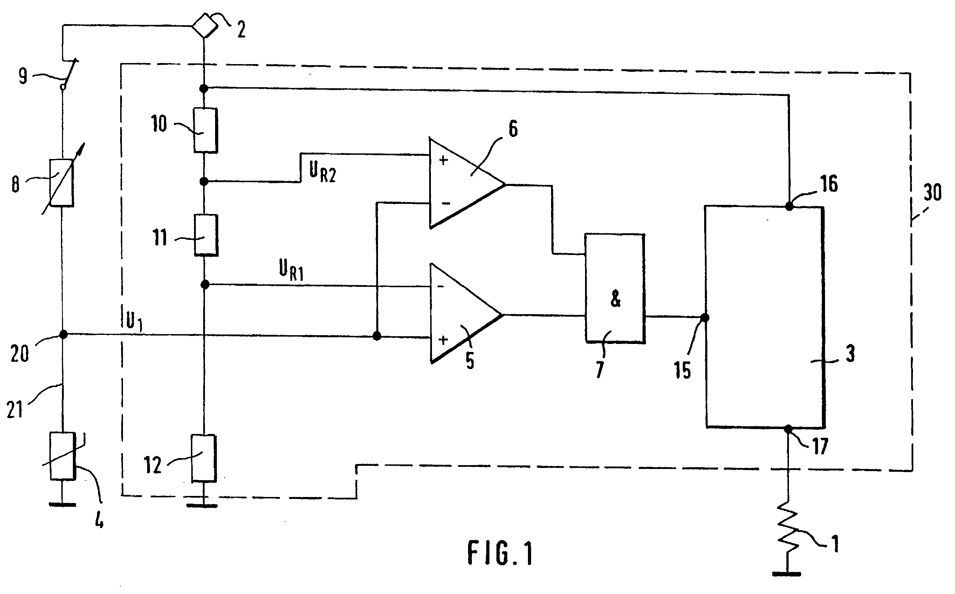

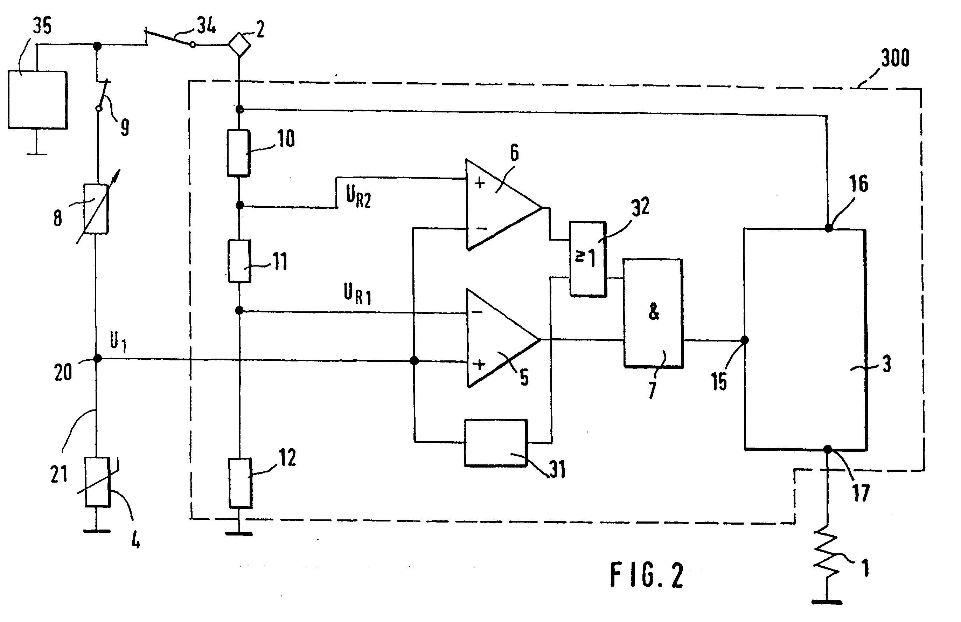

Ausführungsbeispiele der Erfindung sind in der Zeichnung dargestellt und in der nachfolgenden Beschreibung näher erläutert. Es zeigen Figur 1 eine Schaltung mit Unterbrechungserkennung, Figur 2 eine Schaltung mit Unterbrechungserkennung und Verzögerungsschaltung.

### Beschreibung der Ausführungsbeispiele

Figur 1 zeigt einen intelligenten Heizungsschalter 30 zur temperaturabhängigen Regelung des Heizstroms durch eine Heizwicklung 1. Ein als NTC-Widerstand (NTC = "Negative Temperature Coefficient") ausgebildetes Temperaturelement 4 ist über eine Zuleitung 21 und einen Verbindungsknoten 20 mit einem als regelbaren Widerstand ausgebildeten Regler 8 verbunden, der wiederum mit einem Batterieanschluß 2 über einen Schalter 9 verbunden ist. Der Batterieanschluß 2 ist ferner mit einem ersten Lasteingang 16 eines Leistungsschalters 3 verbunden, dessen zweiter Lasteingang 17 mit der Heizwicklung 1 verbunden ist. Außerdem ist der Batterieanschluß 2 über einen ersten, zweiten und dritten Spannungsteilerwiderstand 10, 11 bzw. 12 mit Masse verbunden. Die Schaltung weist zwei als Komparatoren (Vergleichsschaltungen) ausgeführte Vergleichsmittel 5 bzw. 6 auf. Der nicht invertierende Eingang der Vergleichsschaltung 5 ist mit dem Verbindungsknoten 20 verbunden. Der invertierende Eingang ist mit einem Abgriff zwischen dem zweiten und dem dritten Spannungsteilerwiderstand 11 bzw. 12 verbunden. Der Ausgang der Vergleichsschaltung 5 ist mit dem einen Eingang eines Undglieds 7 verbunden. Die weitere Vergleichsschaltung 6 ist über ihren nicht invertierenden Eingang mit einem Abgriff zwischen dem ersten und dem zweiten Spannungsteilerwiderstand 10 bzw. 11 verbunden, der invertierende Eingang ist elektrisch mit dem Verbindungsknoten 20 verbunden. Der Ausgang der weiteren Vergleichsschaltung 6 ist mit dem zweiten Eingang des Undglieds 7 verbunden. Der Ausgang des Undglieds steuert über den Steuereingang 15 des Leistungsschalters 3 den Heizstrom durch die Heizwicklung 1.

Die Schaltung nach Figur 1 stellt mit Hilfe des NTC-Widerstands als Temperatursensor und der Heizwicklung, die beide in der Sitzfläche eines Sitzes eines Kraftfahrzeugs untergebracht sind, die Temperatur in der Sitzfläche ein und hält sie auf einem einzustellenden Temperaturwert. Neben der Hauptfunktion "Einstellen der gewünschten Temperatur" ist außerdem eine Schutzfunktion in der als integriertes Bauelement realisierbaren Schaltung integriert, die bei einer unterbrochenen Zuleitung zum NTC-Widerstand diesen Defekt erkennt und die Heizwicklung abschaltet. Durch den Regler 8 und den NTC-Widerstand 4 wird ein Spannungsteiler zwischen einer Batteriespannung am Batterieanschluß 2 und Masse gebildet, der ein von der Sitztemperatur abhängiges Signal, die vom NTC-Widerstandswert abhängige Temperaturspannung U₁, liefert. Je niedriger die Sitztemperatur ist, desto höher ist die Temperaturspannung U₁. Diese Spannung wird über die Vergleichsschaltung 5 verglichen mit der Schwellwertspannung U_{R1}, die zwischen dem zweiten und dem dritten Spannungsteilerwiderstand 11 bzw. 12 anliegt. Dabei führt eine Temperaturspannung U₁, die höher ist als die Schwellwertspannung U_{R1} zu einem Einschalten des Stroms durch die Heizwicklung 1, und eine niedrigere Spannung als die Schwellwertspannung führt wieder zu einem Ausschalten des Heizstroms. Die Schwellwertspannung liegt dabei üblicherweise bei 30 bis 70% der Batteriespannung, so daß bei NTC-Widerständen mit üblichen Nominalwiderstandswerten von 1 bis 10kΩ im Regeltemperaturbereich ein Einstellen des Temperaturregelpunktes über den Regler 8 mit einem regelbaren Widerstand in der gleichen Größenordnung von 1 bis 10 kΩ möglich ist.

Um zu verhindern, daß eine Unterbrechung der Zuleitung 21 zum Temperaturelement 4 zu einem Dauereinschalten der Heizwicklung führt, was ein unerwünschter und sicherheitskritischer Zustand ist, wird die Temperaturspannung U₁ über die weitere Vergleichsschaltung 6 mit einer Unterbrechungsreferenzspannung U_{R2} verglichen, die zwischen dem ersten und dem zweiten Spannungsteilerwiderstand 10 bzw. 11 anliegt und größer ist als die Schwellwertspannung U_{R1}. Über eine logische Verknüpfung, dem Undglied 7, wird das Einschalten der Heizwicklung bei einer zu hoch liegenden Temperaturspannung U₁ verhindert. Die Unterbrechungsreferenzspannung U_{R2} muß dabei so hoch gewählt werden, daß bei allen Widerstandswerten, die der NTC-Widerstand in den zulässigen Temperaturbereichen bei normalem Betrieb annehmen kann, die Unterdrückung des Heizstroms über die weitere Vergleichsschaltung 6 auf keinen Fall aktiviert wird. Dies gilt besonders für sehr niedrige Anfangstemperaturen des Sitzes bei Einschalten der Sitzheizung über den Lastschalter 9, z. B. -40°C, wobei der NTC-Widerstand aufgrund seiner Temperaturkennlinie sehr hohe Werte im Bereich 100 kΩ bis 1 MΩ annehmen kann. Dies bedeutet, daß die Unterbrechungsreferenzspannung U_{R2} in einem Bereich von 99 bis nahezu 100% der Batteriespannung liegen muß, um ein falsches Ansprechen der Unterbrechungserkennung auszuschließen.

Die kritische Auslegung der Unterbrechungsreferenzspannung U_{R2} kann bei ungünstigen Spannungsabfällen auf den Leitungen unter Umständen dazu führen, daß die Unterbrechungserkennung nicht funktionsfähig ist. Dies gilt vor allem dann, wenn ein Spannungsabfall auf der Leitung zwischen dem Batterieanschluß 2 und dem Schalter 9 auftritt, mit dem die Heizung und damit die Temperaturregelung aktiviert wird. Dieser Spannungsabfall ist besonders dann sehr wahrscheinlich, wenn der Anschluß der Reihenschaltung von Regler 8 und NTC-Widerstand 4 über einen Zündschalter 34 (Figur 2) geführt wird, hinter dem noch weitere Lasten eines Kraftfahrzeugbordnetzes angeschlossen sind, während die Reihenschaltung der Spannungsteilerwiderstände 10, 11 und 12 direkt mit dem Batterieanschluß verbunden ist. Um diese kritische Auslegung und die Gefahr des Funktionsausfalls der Unterbrechungserkennung zu vermeiden, wird eine Zusatzfunktion eingeführt, die in einer Schaltung nach Figur 2 gegeben ist.

Neben den aus Figur 1 bekannten Bestandteilen und Bezugszeichen weist die Schaltung nach Figur 2 folgende Ergänzungen auf: Neben dem bereits genannten Zündschalter 34 sind symbolisch weitere Batterielasten 35 dargestellt, die vom Batterieanschluß aus gesehen hinter dem Anschluß des Schalters 9 liegen. Der integrierte intelligente Heizungsschalter 300 weist eine Verzögerungsschaltung 31, 32 auf. Sie setzt sich zusammen aus einem Monoflopglied 31 und einem Oderglied 32. Der Eingang des Monoflopglieds ist mit dem Verbindungsknoten 20 verbunden. Der Ausgang des Monoflopglieds liegt an dem einen Eingang des Oderglieds 32 an, wobei der andere Eingang des Oderglieds 32 mit dem Ausgang der weiteren Vergleichsschaltung 6 verbunden ist. Der Ausgang des Oderglieds 32 führt zu dem einen Eingang des Undglieds 7, der andere Eingang des Undglieds 7 ist wie in Figur 1 mit dem Ausgang der Vergleichsschaltung 5 verbunden.

Das Monoflopglied 31 wird über eine positive Einschaltflanke am Verbindungsknoten 20, die durch das Schließen des Schalters 9 bewirkt wird, ausgelöst, und es wird ein positiver Impuls mit einer bestimmten Pulslänge erzeugt. Während der Pulsdauer wird eine Wirkung der Unterbrechungserkennung über die logische Oderverknüpfung 32 unterbunden. Dies bedeutet, daß z. B. bei einem Anlaufen der Sitzheizungsfunktion bei sehr niedrigen Umgebungstemperaturen die Heizwirkung durch ein irrtümliches Erkennen einer Unterbrechung nicht abgeschaltet werden kann. Dies führt dazu, daß bis zum Ablauf des Impulses die Sitzheizung und damit auch der NTC-Widerstand in jedem Fall aufgeheizt wird. Dadurch wird sichergestellt, daß der NTC-Widerstand vor der Aktivierung der Unterbrechungserkennung eine bestimmte Mindesttemperatur erreicht hat, die es erlaubt, daß die Unterbrechungsreferenzspannung U_{R2} nicht so kritisch eingestellt werden muß, wie es ohne die verzögerte Aktivierung der Unterbrechungserkennung notwendig wäre. Wenn die Sitzheizung den gewünschten Temperaturwert schon vor Ablauf des Monoflop-Impulses erreicht hat, wird die Sitzheizung über das Undglied 7 schon vor Ablauf des Impulses abgeschaltet. Bei einer geeigneten Wahl der Verzögerungszeit (z. B. 1 bis 2 Minuten), die gegeben ist durch die Pulsdauer des Monoflopglieds, ist es möglich, die Unterbrechungsreferenzspannung U_{R2} im Bereich von 95 bis 98% der Batteriespannung festzulegen, ohne bei einem Anlauf des Systems bei sehr niedrigen Temperaturen ein falsches Ansprechen der Unterbrechungserkennung zu bewirken.

Das Monoflopglied 31 kann insbesondere aus einer Reseteinheit, einer Oszillatoreinheit und einer nachgeschalteten Zählerkette aufgebaut sein. Ein Oszillator im MHz-Bereich weist nur kleine Kapazitäten auf, die in einfacher Weise integrierbar sind. Bis auf die Reihenschaltung von Regler 8 und Temperaturelement 4 sowie der Heizwicklung 1 können alle dargestellten Bauelemente auf einem Chip integriert werden.

Eine weitere Variante ergibt sich durch eine von der Umgebungstemperatur abhängigen Pulsdauer des Monoflopglieds. Insbesondere vorteilhaft ist es, hier einen eigenen Temperatursensor vorzusehen, um die von der Umgebungstemperatur abhängige Regelung der Zeitverzögerung von einer Fehlfunktion des Temperaturelements 4 unabhängig auszugestalten. Beispielsweise ist es möglich, bei einer Umgebungstemperatur von -40 bis -20° die Pulsdauer auf eine Minute einzustellen, bei einer Umgebungstemperatur von -20°C bis 0°C auf eine halbe Minute und bei Temperaturen oberhalb 0°C die Pulsdauer auf vernachlässigbar kleine Werte absinken zu lassen. In einer solchen Ausgestaltung wird, auch wenn der Sitz schon heiß ist und die Zuleitung zum NTC-Widerstand unterbrochen ist, der Heizstrom sofort abgeschaltet.

## Patentansprüche

1. Schaltung zur temperaturabhängigen Regelung des Heizstroms von Sitzheizungen, mit einem ein temperaturabhängiges Signal liefernden Temperaturelement (4) und einer Referenzsignalquelle (10, 11, 12), wobei das Temperaturelement (4) und die Referenzsignalquelle mit jeweils einem Eingang eines Vergleichsmittels (5) verbunden sind, und mit einem Schalter (3) zum Einschalten des Heizstroms, wobei die Schaltung eine weitere Referenzsignalquelle sowie ein weiteres Vergleichsmittel (6) aufweist, und die weitere Referenzsignalquelle und die Spannungszuleitung zum Temperaturelement mit jeweils einem Eingang des weiteren Vergleichsmittels (6) verbunden sind, und die Ausgänge der beiden Vergleichsmittel so verschaltet sind, dass der Schalter (3) eingeschaltet ist, wenn die Temperatur des Temperaturelements (4) einen vorgegebenen Wert unterschreitet und auf der Zuleitung ein weiteres vorgegebenes Signal nicht überschritten wird, **dadurch gekennzeichnet, dass** ein Verzögerungsmittel (31, 32) vorgesehen ist, das das Ausgangssignal des weiteren Vergleichsmittels (6) nur verzögert wirken lässt.

2. Schaltung nach Anspruch 1, **dadurch gekennzeichnet, dass** das Temperaturelement (4) mit dem nicht-invertierenden Eingang und die Referenzsignalquelle mit dem invertierenden Eingang des Vergleichsmittels (5) verbunden ist und dass die weitere Referenzsignalquelle mit dem nicht-invertierenden Eingang und das Temperaturelement mit dem invertierenden Eingang des weiteren Vergleichsmittels (6) verbunden ist.

3. Schaltung nach Anspruch 1 oder 2, **dadurch gekennzeichnet, dass** das Verzögerungsmittel ein Monoflop-Glied (31) und ein ODER-Glied (32) aufweist, wobei der Eingang des Monoflop-Glieds mit dem nichtinvertierenden Eingang des Vergleichsmittel (5), der Ausgang des Monoflop-Glieds mit einem Eingang des ODER-Glieds und der Ausgang des ODER-Glieds mit dem UND-Glied (7) verbunden ist.

4. Schaltung nach Anspruch 2 oder 3, **dadurch gekennzeichnet, dass** die Verzögerungsdauer temperaturabhängig ist.

5. Schaltung nach Anspruch 4, **dadurch gekennzeichnet, dass** ein weiteres Temperaturelement vorgesehen ist, mit dem die Oszillatorfrequenz eines Oszillators des Monoflop-Glieds regelbar ist.

6. Schaltung nach einem der vorhergehenden Ansprüche, **dadurch gekennzeichnet, dass** der die Vergleichsmittel (5, 6) und den Schalter (3) aufweisende intelligente Heizungsschalter (30 bzw. 300) monolithisch integriert ist.

7. Schaltung nach einem der vorhergehenden Ansprüche, **dadurch gekennzeichnet, dass** die beiden Referenzsignale an einer zwischen einem Batterieanschluss (2) und einem Masseanschluss liegenden Reihenschaltung eines ersten (10), zweiten (11) und dritten Spannungsteilerwiderstands (12) abgreifbar sind.

## Claims

1. Circuit for the temperature-dependent control of the heating current of seat heaters, having a temperature element (4) which supplies a temperature-dependent signal, and a reference signal source (10, 11, 12), the temperature element (4) and the reference signal source being connected to in each case one input of a comparison means (5), and having a switch (3) for switching on the heating current, the circuit having a further reference signal source as well as a further comparison means (6), and the further reference signal source and the voltage feed line to the temperature element being connected to in each one input of the further comparison means (6), and the outputs of the two comparison means being wired in such a way that the switch (3) is switched on if the temperature of the temperature element (4) drops below a predefined value and a further predefined signal is not exceeded on the feed line, **characterized in that** a delay means (31, 32) is provided which allows the output signal of the further comparison means (6) to be effective only with a delay.

2. Circuit according to Claim 1, **characterized in that** the temperature element (4) is connected to the non-reverting input, and the reference signal source to the inverting input, of the comparison means (5), and **in that** the further reference signal source is connected to the non-inverting input, and the temperature element to the inverting input, of the further comparison means (6).

3. Circuit according to Claim 1 or 2, **characterized in that** the delay means has a Monoflop element (31) and an OR element (32), the input of the Monoflop element being connected to the non-inverting input of the comparison means (5), the output of the Monoflop element being connected to an input of the OR element, and the output of the OR element being connected to the AND element (7).

4. Circuit according to Claim 2 or 3, **characterized in that** the duration of delay is temperature-dependent.

5. Circuit according to Claim 4, **characterized in that** a further temperature element is provided with which the oscillator frequency of an oscillator of the Monoflop element can be controlled.

6. Circuit according to one of the preceding claims, **characterized in that** the intelligent heating switch (30 or 300) which has the comparison means (5, 6) and the switch (3) is monolithically integrated.

7. Circuit according to one of the preceding claims, **characterized in that** the two reference signals can be tapped at a series connection of a first (10), second (11) and third voltage divider resistor (12), said series circuit being located between a battery terminal (2) and an earth terminal.

## Revendications

1. Circuit de régulation du courant de chauffage d'un moyen de chauffage de siège en fonction de la température comprenant un élément thermosensible (4) fournissant un signal dépendant de la température ainsi qu'une source de signal de référence (10, 11, 2) ;
l'élément thermo-sensible (4) et la source de signal de référence étant reliés respectivement à une entrée d'un comparateur (5) et à un commutateur (3) pour le courant de chauffage ;
le circuit comportant une autre source de signal de référence et un autre comparateur (6) ;
cette autre source de signal de référence et la ligne d'alimentation en tension de l'élément thermosensible étant reliées à une entrée respective de l'autre comparateur (6) ;
les sorties des deux comparateurs étant montées pour que le commutateur (3) soit branché lorsque la température de l'élément thermosensible (4) passe en dessous d'une valeur donnée et la ligne d'alimentation ne dépasse pas un autre signal prédéterminé,
**caractérisé par**
un moyen de temporisation (31, 32) pour temporiser l'action du signal de sortie de l'autre comparateur (6).

2. Circuit selon la revendication 1,
**caractérisé en ce que**
l'élément thermo-sensible (4) est relié à l'entrée non inversée du comparateur (5), la source de signal de référence étant reliée à l'entrée inversée ; et
l'autre source de signal de référence est reliée à l'entrée non inversée et l'élément thermo-sensible est relié à l'entrée inversée de l'autre comparateur (6).

3. Circuit selon la revendication 1 ou 2,
**caractérisé en ce que**
le moyen de temporisation comprend une bascule mono-stable (31) et une porte OU (32), l'entrée de la bascule mono-stable étant reliée à l'entrée non inversée du comparateur (5), la sortie de la bascule mono stable étant reliée à une entrée de la porte OU dont la sortie est reliée à la porte ET (7).

4. Circuit selon la revendication 2 ou 3,
**caractérisé en ce que**
la durée de la temporisation dépend de la température.

5. Circuit selon la revendication 4,
**caractérisé par**
un autre élément thermo-sensible réglant la fréquence d'un oscillateur de la bascule mono-stable.

6. Circuit selon l'une des revendications précédentes,
**caractérisé en ce que**
le commutateur de chauffage (30, 300), intelligent, comportant les comparateurs (5, 6) et le commutateur (3) est intégré de façon monolithique.

7. Circuit selon l'une des revendications précédentes,
**caractérisé en ce que**
les deux signaux de référence sont pris sur un montage en série d'une première (10), seconde (11) et troisième résistance (12) de division de tension, entre une borne de batterie (2) et une borne de masse.
